# EUROPÄISCHE PATENTSCHRIFT

(11) **EP 0 444 220 B1**
(45) Veröffentlichungstag und Bekanntmachung des Hinweises auf die Patenterteilung: **04.05.1994**
(21) Anmeldenummer: 90103733.3
(22) Anmeldetag: 26.02.1990
(51) Int. Cl.: F04B 21/00, H02K 9/19

(54) **Hydraulisches Motor-Pumpenaggregat**
Hydraulic motor-pump unit
Ensemble moto-pompe hydraulique

(43) Veröffentlichungstag der Anmeldung: 04.09.1991
(73) Patentinhaber: HEILMEIER & WEINLEIN Fabrik für Oel-Hydraulik GmbH & Co. KG, D-81608 München (DE)
(72) Erfinder: Brunner, Rudolf, D-8011 Baldham (DE)
(74) Vertreter: Grünecker, Kinkeldey, Stockmair & Schwanhäusser Anwaltssozietät

(56) Entgegenhaltungen:
- EP-A- 0 284 746
- DE-A- 2 209 325
- US-A- 2 648 789
- US-A- 4 866 830
- PATENT ABSTRACTS OF JAPAN vol. 9, no. 307 (M-435)(2030) 04 Dezember 1985
- PATENT ABSTRACTS OF JAPAN vol. 10, no. 299 (M-524)(2355) 11 Oktober 1986

## Beschreibung

Die Erfindung betrifft ein hydraulisches Motor-Pumpenaggregat gemäß dem Oberbegriff des Patentanspruchs 1.

Solche hydraulische Motor-Pumpenaggregate versorgen oder treiben hydraulische Steuervorrichtungen, hydraulische Verbraucher oder ähnliche Einrichtungen, in denen das Hydraulikmedium Arbeit leistet. Ferner finden hydraulische Motorpumpenaggregate in Kühlsystemen Anwendung, wobei das Hydraulikmedium dann das Kühlmedium sein kann. Das Hydraulikmedium nimmt außerhalb des Behälters und besonders im Behälter durch den Elektromotor und das Pumpenelement Verlustwärme auf. Die Verlustwärme muß abgeführt werden, um eine Überhitzung u.a. des Hydraulikmediums zu vermeiden. Das Aggregat kann intermittierend oder im Dauerbetrieb laufen und ist umso universeller einsetzbar, je wirkungsvoller die Verlustwärme aus dem Hydraulikmedium abgeführt wird. Ferner soll das Hydraulikmedium möglichst rasch eine günstige Betriebstemperatur erreichen, wobei 45 bis 50°C erstrebenswert sind. Ein Überschreiten dieses Temperaturbereichs nur um wenige Grade bedeutet eine Mehrbelastung für das Hydraulikmedium und für Dichtungen und andere temperaturempfindliche Komponenten im Aggregat und im Verbraucherkreis. Die Lebensdauer des Hydraulikmediums und die Qualität des Aggregats hängen von der Einhaltung einer moderaten Betriebstemperatur ab. Reichte früher die Wärmeabstrahlung des Behälters zum Einhalten einer tragbaren Betriebetemperatur bei intermittierendem Betrieb aus, so werden zunehmend auch für Dauerbetrieb benutzte Aggregate mit einer Zwangskühlung durch ein außenliegendes Kühlgebläse ausgestattet, das zusammen mit einer verrippten Außen-Oberfläche des Behälters zu einer verbesserten Wärmeabfuhr führt.

Bei einem aus der EP-A-01 98 250 bekannten hydraulischen Motorpumpenaggregat dieser Art ist außen auf dem Behälter ein Kühlgehläse angebracht, das die Oberfläche des Behälters bestreicht. Der Elektromotor ist offen ausgebildet und in den Behälteroberteil eingesetzt, wo er vom Hydraulikmedium gekühlt wird, während über den direkten Kontakt mit der Innenwand des Gehäuseoberteils ein Wärmeabfluß zum zwangsgekühlten Außenoberflächenbereich stattfindet. Zwar wird Verlustwärme außen durch die Zwangskühlung wirkungsvoll abgeführt; jedoch läßt innen die Wärmeübertragung vom Elektromotor und vom Hydraulikmedium an den Behälteroberteil zu wünschen übrig. Die Betriebstemperatur ist unter ungünstigen Betriebsbedingungen zu hoch. Längsrippen an der Behälterinnenwand sollen zwar den Wärmeübergang vom Hydraulikmedium in die Behälterinnenwand verbessern. Die Längsrippen stören jedoch die in Drehrichtung des Elektromotors auftretende Zirkulation des Hydraulikmediums und verringern das Füllvolumen unzweckmäßig. Die Verlustwärmeabfuhr vom Hydraulikmedium in die Behälterinnenwand wird bei gestörter Zirkulation wegen des schlechten Flüssigkeitsaustausches in den Taschen zwischen den Längsrippen eher beeinträchtigt. Die Leistupgsfähigkeit der Zwangskühlung kann nicht ausreichend genutzt werden, weil der Wärmeübergang vom Hydraulikmedium in die Behälterinnenwand ungenügend bleibt.

Bei einem gemäß der DE-PS 37 05 909 weiterentwickelten hydraulischen Motor-Pumpenaggregat ist ein Wärmeübertragungsring vorgesehen, der den Wärmeübergang vom Elektromotor über die Behälterwand zum zwangsgekühlten Bereich verbessern soll, um die Kapazität der Zwangskühlung besser zu nutzen. Dies reduziert zwar schon die Wärmebelastung des Hydraulikmediums. Die Verlustwärme im Hydraulikmedium wird durch diese Maßnahme aber nicht besser an den Behälter abgeführt.

Aus der US-A-26 48 789 ist ein spezieller elektrischer Antriebsmotor bekannt, bei dem die Welle stillsteht, während das nur zu einem Teil mit Öl gefüllte Gehäuse sich als Rotor um die Welle dreht, wobei aufgrund der Fliehkraft die Ölfüllung einen mitrotierenden, an der Gehäuseinnenwand anliegenden Rotationskörper bildet. Die Gehäuseinnenwand besitzt axiale oder radiale Rippen oder Vorsprünge, z.B. ein eingeschnittenes Feingewinde, um den Temperaturgradienten zwischen dem Öl und dem Gehäuse zu reduzieren. Da der Öl-Rotationskörper mit dem Gehäuse rotiert, d.h. relativ zur Gehäuseinnenwand feststeht, ist der Wärmeübergang vom Öl zum Gehäuse unbefriedigend. Es kann zu hoher thermischer Belastung des Öls kommen, was jedoch insofern unkritisch ist, als das Öl als reines Kühlmedium für den Motor dient, eine für Kühlzwecke geeignete Spezifikation hat, und nicht zusätzlich als temperaturempfindliches Arbeitsmedium für weitere Zwecke eingesetzt wird.

Der Erfindung liegt die Aufgabe zugrunde, ein hydraulisches Motor-Pumpenaggregat der eingangs genannten Art zu schaffen, bei dem auch bei Dauerbetrieb die thermische Belastung des Hydraulikmediums reduziert und eine niedrige Betriebetemperatur gewährleistet wird.

Die gestellte Aufgabe wird erfindungsgemäß durch die im kennzeichnenden Teil des Patentanspruchs 1 angegebenen Merkmale gelöst.

Mit der in Drehrichtung des Elektromotors umlaufend orientierten, widerstandsarmen Strukturierung der Behälterinnenwand wird die Oberfläche wirksam vergrößert, an der das Hydraulikmedium mit der Behälterinnenwand in Kontakt tritt. Die Vergrößerung der Kontaktoberfläche ermöglicht bei an sich konstantem Wärmeübertragungsfaktor zwischen dem Hydraulikmedium und der Behälterinnenwand eine Steigerung der Verlustwärmeabfuhr. Dazu kommt wegen der in Drehrichtung des Elektromotors orientierten Strukturierung eine Steigerung der Wärmeabfuhr durch die nicht mehr gestörte, Zirkulation des Hydraulikmediums, wodurch die Grenzschicht des Hydraulikmediums an der Kontaktfläche dünn bleibt, so daß wegen des wirksamen Flüssigkeitsaustausches und der relativen Geschwindigkeit zwischen dem Hydraulikmedium und der Behälterwand eine große Wärmemenge in die Behälterwand gebracht wird. Mit anderen Worten ermöglichen die Vergrößerung der Kontaktoberfläche durch die Strukturierung und der auf die Zirkulation des Hydraulikmediums abgestimmte Verlauf der Strukturierung in Kombination einen gesteigerten Verlustwärmeeintritt in die Behälterwand. Die durch die Rotation der Komponenten des Elektromotors erzwungene Zirkulation des Hydraulikmediums führt zu einer gesteigerten Wärmeabgabe verglichen mit der Wärmeabgabe bei stehendem oder bei der Zirkulation gehindertem Hydraulikmedium. Von der Behälterwand wird die gesteigerte Wärmemenge wegen des Kapazitätsüberschusses der Zwangskühlung leicht angeführt. Die Kapazität der Zwangskühlung wird deutlich besser genutzt als bisher. Das Resultat ist eine spürbare Verringerung der Betriebstemperatur des Hydraulikmediums auch unter erschwerten Betriebsbedingungen. Der wünschenswerte Vorteil eines raschen Erreichens der Betriebstemperatur wird durch die Strukturierung nicht in spürbarem Maß beeinträchtigt, weil bei kaltem Hydraulikmedium die Grenzschicht an der Kontaktoberfläche zunächst dicker und die Wärmeübertragung geringer ist.

In dieser Hinsicht ist die Ausführungsform gemäß Anspruch 2 zweckmäßig, weil die Rotation der sich nach oben durch das Hydraulikmedium erstreckenden Welle, die gleichzeitig das Gebläse treibt, zusammen mit den anderen drehenden Komponenten des Elektromotors das Hydraulikmedium zu einer wirksamen, turbulenzarmen, kreisförmigen Zirkulation anregt, die sich bis in die nur dünne Grenzschicht unmittelbar an der Kontaktoberfläche auswirkt und die Wärmeabgabe vom Hydraulikmedium an die Behälterwand steigert.

Die Nuten der Ausführungsform von Anspruch 3 sind einfach herstellbar. Sie führen zu keiner Beeinträchtigung der Zirkulation des Hydraulikmediums.

Alternativ ist auch die Ausführungsform gemäß Anspruch 4 zweckmäßig, weil ein Gewinde an der Innenwand besonders einfach herstellbar ist, wobei die Gewindesteigung keinen spürbar störenden Einfluß auf die Zirkulation des Hydraulikmediums nimmt.

Günstig ist ferner die Ausführungsform gemäß Anspruch 5. Die Wandstärkenverringerung durch die Strukturierung ist bei handelsüblichen Behältern tragbar. Die spanabhebende Bearbeitung ist einfach und kostengünstig.

Besonders zweckmäßig ist die Ausführungsform gemäß Anspruch 6, weil durch die spanlose Verformung eine für die Strömung des zirkulierenden Hydraulikmediums sehr widerstandsarme Oberfläche in der Strukturierung erreicht wird.

Besonders vorteilhaft ist in diesem Zusammenhang die Ausführungsform gemäß Anspruch 7, bei der durch spanlose Verformung das in den Nuten verdrängte Material über den Innendurchmesser der Behälterinnenwand vortretende Kämme bildet. Es wird durch die nach innen verformten Kämme bei verringerter Wandstärkenschwächung eine große Kontaktoberfläche erreicht.

Besonders einfach herstellbare Ausführungsformen gehen aus den Ansprüchen 8 und 9 hervor.

Alternativ dazu ist es auch möglich, das Ausmaß der Oberflächenvergrößerung über den axialen Bereich der Strukturierung gemäß den Ansprüchen 10 und/oder 11 zu variieren, um dort gezielt mehr Wärme in die Behälterwand zu übertragen, wo der direkte Wärmefluß vom Elektromotor zum zwangsgekühlten Bereich geringer ist. Die Variation der Oberflächenvergrößerung in axialer Richtung ist dadurch gegeben, daß die axiale Nutteilung oder die Gewindesteigung in axialer Richtung variiert wird.

Bei allen vorerwähnten Ausführungsformen ist es vorteilhaft, wenn die Strukturierung im Längsschnitt symmetrisch ist, d.h., daß die Querschnitte und ggfs. die Formen benachbarter Nuten und Kämme einander gleich sind.

Vorteilhaft ist ferner die Ausführungsform gemäß Anspruch 12, weil diese Formen der Nuten und der Kämme mit einfachen, haltbaren Werkzeugen herstellbar sind.

Eine besonders zweckmäßige Ausführungsform, die kostengünstig herstellbar und einfach montierbar ist, geht aus Anspruch 13 hervor. Der erste Abstand zwischen dem Wärmeübertragungsring und dem Anfang der Strukturierung stellt sicher, daß der Wärmeabfluß vom Wärmeübertragungsring in die Behälterwand in Richtung zum zwangsgekühlten Bereich nicht durch eine Wandstärkenverringerung infolge der Strukturierung beeinträchtigt wird. Der zweite Abstand trägt dem Umstand Rechnung, daß das Hydraulikmedium üblicherweise nur ein maximales Füllstandsniveau erreicht, so daß eine oberhalb des maximalen Füllstandsniveaus vorgesehene Strukturierung keine Verbesserung der Wärmeübertragung erbrächte.

Im Unterteil, in dem keine nennenswerte Zirkulation des Hydraulikmediums vorhanden ist, kann mit der Maßnahme gemäß Anspruch 14 ebenfalls eine Verbesserung der Verlustwärmeabgabe in den Behälter erzielt werden.

Wichtig ist ferner der Gesichtspunkt von Anspruch 15, weil der direkte Wärmeabfluß vom Elektromotor, sozusagen am Hydraulikmedium vorbei, nicht gestört wird.

Schließlich ist auch die Maßnahme von Anspruch 16 zweckmäßig, weil eine bis zum oberen Ende des Oberteils fortgeführte Strukturierung keinen spürbaren Effekt hätte und nur unnötiger Bearbeitungsaufwand wäre.

Anhand der Zeichnung werden Ausführungsformen des Erfindungsgegenstandes erläutert. Es zeigen:
- Fig. 1: einen schematisierten Längsschnitt durch ein hydraulisches Motor-Pumpenaggregat,
- Fig. 2: einen Schnitt in der Ebene II-II in Fig. 1, und
- Fig. 3a-3d: verschiedene Detailausführungsvarianten.

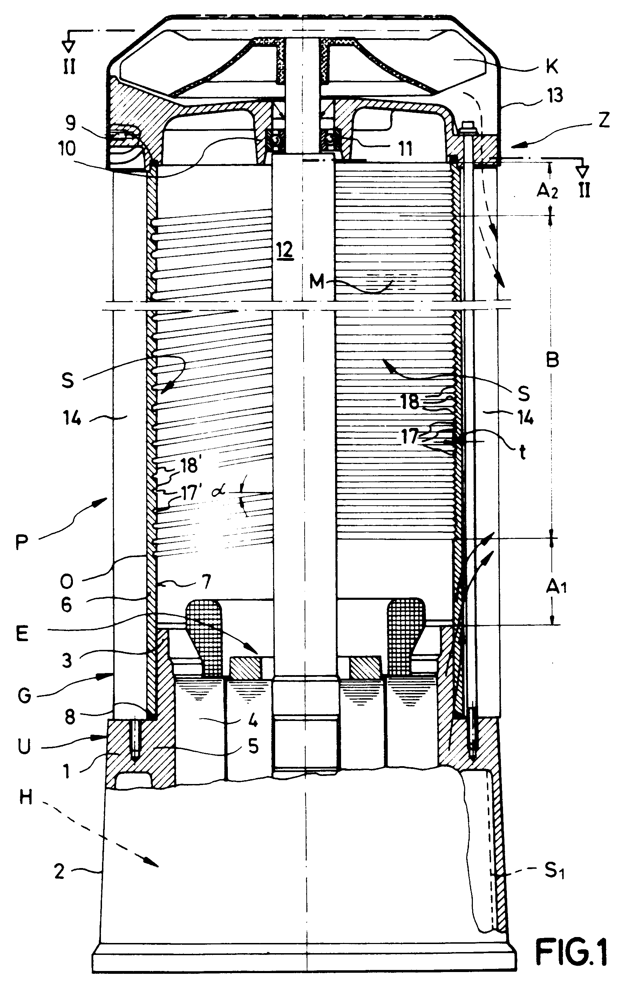

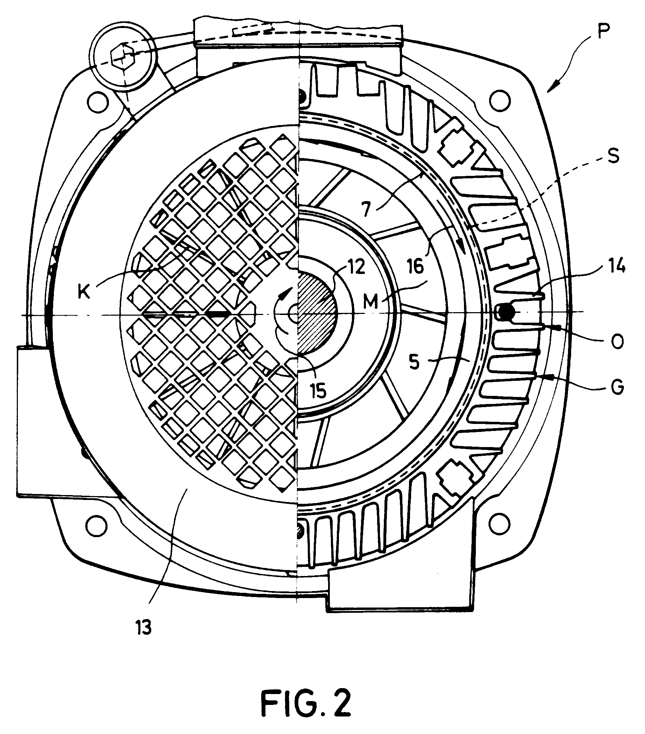

Gemäß den Fig. 1 und 2 weist ein hydraulisches Motor-Pumpenaggregat P einen aufrecht aufstellbaren Behälter G auf, der aus einem als Gußteil hergestellten Unterteil U und einem darauf aufgesetzten, rohrförmigen Oberteil O, z.B. aus einer Leichtmetall-Legierung oder aus Gußeisen, besteht. Als oberer Behälterabschluß 10 dient ein Lagerschild, der ein Wälzlager 11 für eine Welle 12 eines im Bereich der Trennfuge des Behälters G eingebauten, offenen Elektromotors E enthält. Die Welle 12 ist unten in nicht-dargestellter Weise ebenfalls gelagert. Im Unterteil U ist wenigstens ein hydraulisches Pumpenelement (nicht gezeigt) angeordnet, das durch die Welle 12 getrieben wird und den Behälter G bis zu einem maximalen Füllstand füllendes Hydraulikmedium M unter Druck zu außenliegenden Verbrauchern fördert. Der Rücklauf des Hydraulikmediums erfolgt in nicht-dargestellter Weise oben. Außen sitzt auf dem Behälter G ein Gebläse K, das bei der gezeigten Ausführungsform durch die Welle 12 angetrieben wird. Das Gebläse K bildet zusammen mit einer Haube 13 eine Zwangskühlung Z der äußeren Oberfläche des Behälters G, wobei zur verbesserten Wärmeabfuhr der Oberteil O außen mit längsverlaufenden Kühlrippen 14 ausgestattet ist. Das Gebläse K könnte auch einen eigenen Antrieb, z.B. einen thermostatgesteuerten, aufweisen.

Der Unterteil U besitzt einen verdickten Mittelbereich 1 und einen davon kegelig nach unten verlaufenden Fußteil 2. Der Mittelbereich 1 ist als Wärmeübertragungsring 5 ausgebildet, in den ein Stator 4 des Elektromotors E eingepreßt ist. Das kragenartige obere Ende 3 des Wärmeübertragungsrings 5 ist in den Oberteil O innen eingesteckt, zweckmäßigerweise abgedichtet eingepreßt, derart, daß es über den Stator 4 in axialer Richtung hinausragt und die Spulenköpfe umgibt.

Der Oberteil O ist ein zweckmäßigerweise gezogenes Rohr 6 mit einer zylindrischen Innenwand 7, einem unteren Ende 8 und einem oberen Ende 9. Die Kühlrippen 14 sind einstückig mit dem Rohr 6 ausgebildet.

Die Drehrichtung der Welle 12 ist in Fig. 2 mit einem Pfeil 15 angedeutet. Durch die Drehung der Welle 12 und durch die Drehung der anderen, rotierenden Komponenten des Elektromotors E wird im Betrieb das Hydraulikmedium M zu einer kreisförmigen Zirkulation in Richtung eines Pfeils 16 angeregt.

In einem axial begrenzten Bereich B ist in der Innenwand 7 des Oberteils O eine in Umfangsrichtung orientierte, widerstandsarme Strukturierung S vorgesehen. Die Strukturierung S besteht (rechte Hälfte von Fig. 1) aus zueinander parallelen und in Umfangsrichtung verlaufenden, hier dreieckförmigen, Nuten 17 und dreieckigen Kämmen 18. Der Bereich B beginnt in einem ersten Abstand A1 vom Ende 3 des Wärmeübertragungsrings 5 und endet in einem zweiten Abstand A2 vom oberen Ende 9 des Oberteils O. Die mit t bezeichnete Tiefe der Nuten 17 nimmt vom Elektromotor nach oben zu und gegen das oberen Ende des Bereiches B wieder ab. Es ist aber auch möglich, die Tiefe t über die axiale Länge des Bereiches B konstant zu halten oder von unten nach oben kontinuierlich zu steigern, so daß die Hüllfläche der Nuten 17 ein sich nach oben erweiternder Kegel wäre. Die Maßnahmen, die Nuttiefe und auch die axiale Teilung zwischen den Nuten jeweils in axialer Richtung zu variieren, können miteinander kombiniert sein.

Der Abstand A1 ist so bemessen, daß der durch Pfeile angedeutete Wärmefluß vom Stator 4 über den Wärmeübertragungsring 5 in das Rohr 6 nicht gedrosselt wird. Der Abstand A2 entspricht dem Abstand des maximalen Füllniveaus vom oberen Ende 9 des Oberteils O.

Auch im Unterteil U kann eine Strukturierung S1 ähnlich der Strukturierung S vorgesehen sein, durch die eine verbesserte Wärmeübertragung in den Fußteil 2 und von diesem nach außen stattfindet. Da im Unterteil U keine nennenswerte Zirkulation des Hydraulikmediums M stattfindet, könnte die Strukturierung S1 auch von Längsrippen gebildet sein.

In der linken Hälfte von Fig. 1 ist dargestellt, daß die Strukturierung S ein in die Innenwand 7 eingeformtes Gewinde mit Nuten 17' und dazwischen stehenden Kämmen 18' sein kann, wobei die Gewindesteigung α über den Bereich B konstant ist. Die Gewindetiefe nimmt jedoch in Richtung von unten nach oben zu. Im Hinblick auf eine nach oben zunehmende Kontaktflächen-Vergrößerung könnte ferner die Gewindesteigung α unten größer als oben sein. Das Gewinde 17', 18' könnte auch mit konstanter Gewindetiefe und -steigung über den Bereich B verlaufen. Es könnten auch einander überkreuzende Gewindenuten zweier gegenläufiger Gewinde vorgesehen sein.

Im Betrieb des Aggregats P wird die vom Elektromotor E erzeugte Verlustwärme zum Teil in das Hydraulikmedium M abgegeben und zum anderen Teil über den Wärmeübertragungsring 5 direkt in das Rohr 6 geführt, von dem sie über die Zwangskühlung Z nach außen abgegeben wird. Ferner nimmt das Hydraulikmedium bei seiner Arbeit zusätzlich Verlustwärme auf.

Das den Oberteil O füllende Hydraulikmedium wird durch die Welle 12 und die drehenden Komponenten des Elektromotors E und gegebenenfalls durch das in tangentialer Richtung zurückfließende Hydraulikmedium von den Verbrauchern zu der in Fig. 2 mit dem Pfeil 16 angedeuteten Zirkulation in Umfangsrichtung angeregt.

Das Hydraulikmedium streicht der widerstandsarmen Strukturierung S der Innenwand 7 entlang und gibt die Verlustwärme wirksam an das Rohr 6 ab, von dem sie außen über die Kühlrippen 14 und die Zwangskühlung Z abgeführt wird. Die Grenzschicht an der Strukturierung S ist wegen der widerstandsarmen und in Zirkulationsrichtung ausgerichteten Orientierung der Strukturierung dünn, so daß die Wärmeabgabe an das Rohr 6 einerseits durch die vergrößerte Oberfläche und andererseits durch die andauernde Bewegung des Hydraulikmediums gesteigert ist. Die Temperatur des Hydraulikmediums, im vorliegenden Falle Hydrauliköl, kann auch bei Dauerbetrieb problemlos zwischen 45 und 50°C gehalten werden.

Im vorliegenden Ausführungsbeispiel beträgt die Wandstärke des Rohres 6 ca. 5mm. Die freie Innenwand 7 ist ca. 240mm Lang. Die Abstände A1 und A2 betragen 50 bzw. 30mm. Die durchschnittliche Tiefe t der Nuten 17 bzw. 17' beträgt 1,5mm, wobei sie oben bis zu 2,5mm beträgt und unten bis auf 0mm ausläuft. Die Nuten 17 bzw. das Gewinde 17', 18' sind durch eine spanabhebende Bearbeitung, z.B. mittels eines Dreh- oder Schneidwerkzeuges, hergestellt. Alternativ ist auch eine spanlose Verformung durch Rollen oder Prägen möglich, was den Vorteil hat, daß das im Bereich der Nuten verdrängte Material die Kämme 18 bzw. 18' bildet, die nach innen über den Innendurchmesser di vortreten und bei geringerer Wandstärkenschwächung zu einer optimal großen Kontaktoberfläche für das Hydraulikmedium führen.

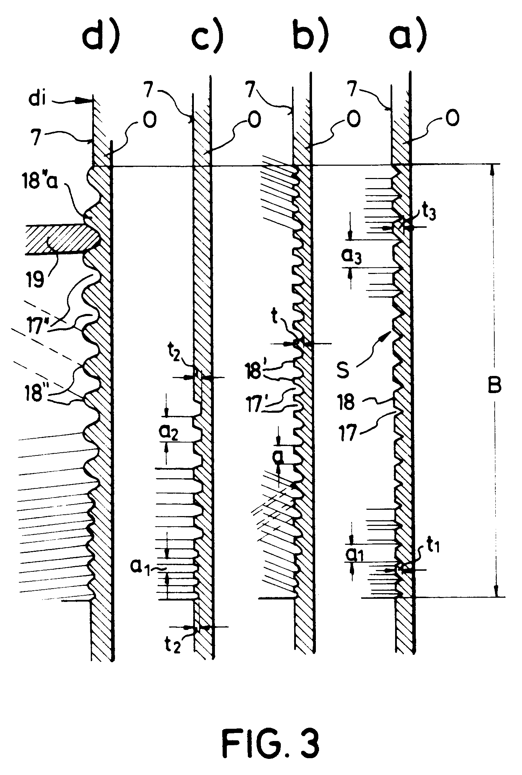

In Fig. 3a bis 3d sind verschiedene Ausführungsvarianten angedeutet.

Gemäß Fig. 3a sind die zueinander parallelen Nuten 17, die von trapezförmigen Kämmen 18 benachbart sind, von dreieckiger Form, wobei die Axialteilung a1 unten kleiner ist als oben (a3). Ferner ist die Tiefe t1 der Nuten 17 unten geringer als oben (t3). Die Tiefe kann abgestuft oder allmählich variieren. Die Kämme 18 fluchten mit der Innenwand 7.

Bei der Ausführungsform gemäß Fig. 3b ist die Strukturierung S ein Gewinde 17', 18', dessen Gewindetiefe a im Mittelbereich am größten und nahe den beiden Endbereichen am kleinsten ist. Die Nuten 17' sind gerundet, während die Kämme 18' eben sind. Die Axialteilung t der Gewindenuten 17' ist oben und unten am größten und in der Mitte am kleinsten.

Bei der Ausführungsform gemäß Fig. 3c sind die Nuten und Kämme trapezförmig, wobei die Tiefe t1, t2 und die Axialteilung a1, a2 von unten nach oben zunehmen, und zwar abgestuft.

Bei der Ausführungsform gemäß Fig. 3d sind die Nuten 17'' und Kämme 18'' durch eine spanlose Verformung, z.B. durch Rollen oder Prägen mittels eines Werkzeuges 19 gebildet. Dies hat den Vorteil, daß das in den Nuten 17'' verdrängte Material nach innen über den Innendurchmesser di der Innenwand 7 vorstehende Kammbereiche 18''a bildet. Bei der spanlosen Verformung können beliebige Nut- und Kammformen realisiert werden. In der Regel wird die Oberflächenvergrößerung durch die Strukturierung S so abgestimmt, daß die Oberflächenvergrößerung von unten nach oben zunimmt. Durch spanlose Verformung sind auch beliebige Gewindeformen realisierbar.

## Patentansprüche

1. Hydraulisches Motor-Pumpenaggregat (P), mit einem einen Elektromotor (E) und wenigstens ein davon getriebenes, untenliegendes Pumpenelement (H) enthaltenden Behälter (G), der mit dem vom Pumpenelement förderbaren Hydraulikmedium (M) bis oberhalb des Elektromotors gefüllt ist, mit einer wenigstens ein außenliegendes Kühlgebläse (K) für die Behälteraußenseite aufweisenden Zwangskühlung (Z) und mit einer an der Behälterinnenwand (7) vorgesehenen Einrichtung zum Vergrößern der mit dem Hydraulikmedium (M) in Kontakt stehenden Behälteroberfläche, **dadurch gekennzeichnet**, daß die Einrichtung eine annähernd in Drehrichtung (15) des Elektromotors umlaufend orientierte, widerstandsarme Strukturierung (S) der Behälter-Innenwand (7) ist, und daß das Hydraulikmedium (M) im Behälter (G) mit den rotierenden Komponenten des Elektromotors (E) zumindest oberhalb des Elektromotors (E) in eine in Drehrichtung (15) umlaufende Zirkulation (16) bringbar ist.

2. Hydraulisches Motor-Pumpenaggregat nach Anspruch 1, **dadurch gekennzeichnet**, daß die Welle (12) des Elektromotors (E) nach oben durch einen Behälterabschluß (10) verlängert ist, das Gebläse (K) treibt und als Zirkulationsanreger für das Hydraulikmedium (M) dient.

3. Hydraulisches Motor-Pumpenaggregat nach Anspruch 1, **dadurch gekennzeichnet,** daß die Strukturierung (S) von in Umfangsrichtung umlaufenden, parallelen Nuten (17, 17'') in der Behälterinnenwand (7) gebildet wird.

4. Hydraulisches Motor-Pumpenaggregat nach Anspruch 1, **dadurch gekennzeichnet**, daß die Strukturierung (S) ein Gewinde (17', 18') in der Behälterinnenwand (7) ist.

5. Hydraulisches Motor-Pumpenaggregat nach den Ansprüchen 3 und 4, **dadurch gekennzeichnet**, daß die Nuten (17) bzw. das Gewinde (17', 18') durch spanabhebende Bearbeitung in die Behälterinnenwand (7) eingeformt, z.B. eingeschnitten, sind bzw. ist.

6. Hydraulisches Motor-Pumpenaggregat nach den Ansprüchen 3 und 4, **dadurch gekennzeichnet**, daß die Nuten (17'') bzw. das Gewinde durch spanlose Verformung, z.B. durch Rollen oder Prägen, in die Behälterinnenwand (7) eingeformt sind bzw. ist.

7. Hydraulisches Motor-Pumpenaggregat nach Anspruch 6, **dadurch gekennzeichnet**, daß die zwischen den Nuten (17'') bzw. den Gewindenuten stehenden Kämme (18'') durch die spanlose Verformung über den Innendurchmesser (dᵢ) der unverformten Behälterinnenwand (7) nach innen vorstehen.

8. Hydraulisches Motor-Pumepnaggregat nach einem der Ansprüche 1 bis 6, **dadurch gekennzeichnet**, daß sich die Strukturierung (3) über einen axial begrenzten Bereich (B) der Behälterinnenwand (7) erstreckt, und daß die Tiefe der Nuten bzw. des Gewindes über den Bereich (B) konstant ist.

9. Hydraulisches Motor-Pumpenaggregat nach Anspruch 8, **dadurch gekennzeichnet**, daß die axiale Nutteilung (a1, a2, a3....) bzw. Gewindesteigung (α) über den Bereich (B) konstant ist.

10. Hydraulisches Motor-Pumpenaggregat nach einem der Ansprüche 1 bis 7 und 9, **dadurch gekennzeichnet**, daß die Tiefe der Nuten (17, 17'') bzw. des Gewindes (17', 18') in axialer Richtung von zumindest einem Ende des axialen Bereiches (B) der Strukturierung (S) aus allmählich oder abgestuft zunimmt.

11. Hydraulisches Motor-Pumpenaggregat nach einem der Ansprüche 1 bis 8 und 10, **dadurch gekennzeichnet**, daß in axialer Richtung von zumindest einem Ende des axial begrenzten Bereiches (B) der Strukturierung (S) aus die axiale Nutteilung (a1, a2,....) allmählich oder abgestuft zunimmt bzw. daß die Gewindesteigung (α) allmählich oder abgestuft abnimmt, derart, daß die Oberflächenvergrößerung mit zunehmendem Abstand vom Ende des axialen Bereiches (B) zunimmt.

12. Hydraulisches Motor-Pumpenaggregat nach einem der Ansprüche 1 bis 11, **dadurch gekennzeichnet**, daß die Strukturierung (S) in einem Längsschnitt des Behälters (G) dreieckige, runde, trapezförmige, rechteckige oder wellenförmige Nuten (17, 17', 17'') und Kämme (18, 18', 18'') aufweist.

13. Hydraulisches Motor-Pumpenaggregat nach einem der Ansprüche 1 bis 12, **dadurch gekennzeichnet**, daß der Behälter (G) geteilt ist und aus einem rohrförmigen, außenverrippten Oberteil (O), z.B. aus einer Leichtmetall-Legierung oder aus Gußeisen, und einem innen in den Oberteil (O) eingesteckten Unterteil (U) besteht, daß der Elektromotor (E) in einen Wärmeübertragungsring (5) eingesetzt ist, der sich über die Behälterteilfuge nach oben in den Oberteil (O) erstreckt und an der Behälterinnenwand (7) im Oberteil (O) anliegt, und daß die Strukturierung (S) im Oberteil (O) in einem vorbestimmten axialen ersten Abstand (A1) vom Wärmeübertragungsring (5) beginnt und in einem vorbestimmten zweiten Abstand (A2) vom oberen Ende des Oberteils (O) endet.

14. Hydraulisches Motor-Pumpenaggregat nach einem der Ansprüche 1 bis 13, **dadurch gekennzeichnet**, daß auch im Unterteil (U) in der Behälterinnenwand eine Strukturierung (S1) vorgesehen ist.

15. Hydraulisches Motor-Pumpenaggregat nach Anspruch 15, **dadurch gekennzeichnet**, daß die Größe des ersten Abstandes (A1) auf einen weitgehend ungedrosselten Wärmeabfluß vom Elektromotor (E) über den Wärmeübertragungsring (5) in den Oberteil (O) in Richtung zur Zwangskühlung (Z) abgestimmt ist.

16. Hydraulisches Motor-Pumpenaggregat nach Anspruch 13, **dadurch gekennzeichnet**, daß die Größe des zweiten Abstandes (A2) auf das Füllniveau des Behälters (G) mit Hydraulikmedium (M) abgestimmt ist.

## Claims

1. Hydraulic motor/pump assembly (P), having a tank (G) which contains an electric motor (E) and at least one bottom pump element (H), driven by said electric motor, and is filled by the hydraulic medium (M), which can be delivered by the pump element, to above the electric motor, having a forced cooling system (Z) which exhibits at least one exterior cooling blower (K) for the tank outer side, and having a device which is provided on the tank inner wall (7) and is intended to enlarge the tank surface which is in contact with the hydraulic medium (M), characterized in that the device is a low-resistance texturing (S), of the tank inner wall (7), which is oriented such that it runs around approximately in the direction (15) of rotation of the electric motor, and in that the rotating components of the electric motor (E) can cause the hydraulic medium (M) in the tank (G) to circulate (16), running in the direction (15) of rotation, at least above the electric motor (E).

2. Hydraulic motor/pump assembly according to Claim 1, characterized in that the shaft (12) of the electric motor (E) is lengthened at the top by a tank termination (10), drives the blower (K) and serves as circulation generator for the hydraulic medium (M).

3. Hydraulic motor/pump assembly according to Claim 1, characterized in that the texturing (S) is formed by parallel grooves (17, 17''), running around in the circumferential direction, in the tank inner wall (7).

4. Hydraulic motor/pump assembly according to Claim 1, characterized in that the texturing (S) is a thread (17', 18') in the tank inner wall (7).

5. Hydraulic motor/pump assembly according to Claims 3 and 4, characterized in that the grooves (17) or the thread (17', 18') are or is formed, e.g. cut, in the tank inner wall (7) by machining.

6. Hydraulic motor/pump assembly according to Claims 3 and 4, characterized in that the grooves (17'') or the thread are or is formed in the tank inner wall (7) by non-cutting deformation, e.g. by rolling or stamping.

7. Hydraulic motor/pump assembly according to Claim 6, characterized in that, owing to the non-cutting deformation, the tongues (18'') standing between the grooves (17'') or the thread grooves project inwards beyond the internal diameter (dᵢ) of the non-deformed tank inner wall (7).

8. Hydraulic motor/pump assembly according to one of Claims 1 to 6, characterized in that the texturing (S) extends over an axially delimited region (B) of the tank inner wall (7), and in that the depth of the grooves or of the thread is constant over the region (B).

9. Hydraulic motor/pump assembly according to Claim 8, characterized in that the axial groove pitch (a1, a2, a3...) or thread pitch (α) is constant over the region (B).

10. Hydraulic motor/pump assembly according to one of Claims 1 to 7 and 9, characterized in that the depth of the grooves (17, 17'') or of the thread (17', 18') increases, in a gradual or stepped manner, in the axial direction from at least one end of the axial region (B) of the texturing (S).

11. Hydraulic motor/pump assembly according to one of Claims 1 to 8 and 10, characterized in that the axial groove pitch (a1, a2,...) increases, in a gradual or stepped manner, in the axial direction from at least one end of the axially delimited region (B) of the texturing (S), or in that the thread pitch (α) decreases in a gradual or stepped manner such that the surface enlargement increases as the distance from the end of the axial region (B) increases.

12. Hydraulic motor/pump assembly according to one of Claims 1 to 11, characterized in that the texturing (S) has, in a longitudinal section of the tank (G), triangular, round, trapezoidal, rectangular or undulate grooves (17, 17', 17'') and tongues (18, 18', 18'').

13. Hydraulic motor/pump assembly according to one of Claims 1 to 12, characterized in that the tank (G) is divided and comprises a tubular upper part (O) which is ribbed on the outside, e.g. consisting of a light metal alloy or cast iron, and a lower part (U) which is plugged into the inside of the upper part (O), in that the electric motor (E) is introduced into a heat-transfer ring (5) which extends, beyond the tank parting line, upwards into the upper part (O) and rests on the tank inner wall (7) in the upper part (O), and in that the texturing (S) in the upper part (O) begins at a predetermined axial first distance (A1) from the heat-transfer ring (5) and ends at a predetermined second distance (A2) from the upper end of the upper part (O).

14. Hydraulic motor/pump assembly according to one of Claims 1 to 13, characterized in that a texturing (S1) is also provided in the lower part (U), in the tank inner wall.

15. Hydraulic motor/pump assembly according to Claim 13, characterized in that the size of the first distance (A1) is matched to a largely non-throttled heat discharge from the electric motor (E), via the heat-transfer ring (5), into the upper part (O) in the direction of the forced cooling system (Z).

16. Hydraulic motor/pump assembly according to Claim 13, characterized in that the size of the second distance (A2) is matched to the filling level of the tank (G) with hydraulic medium (M).

## Revendications

1. Groupe motopompe hydraulique (P), avec un réservoir (G) contenant un moteur électrique (E) et un élément de pompage (H) au moins, sous-jacent, entraîné par ce dernier, le réservoir étant rempli du fluide hydraulique (M), refoulé par l'élément de pompage, jusqu'au-dessus du moteur électrique, avec un refroidissement forcé (Z), présentant au moins un ventilateur de refroidissement (K) externe pour la face extérieure du réservoir, et avec un dispositif, prévu sur la paroi interne (7) du réservoir pour augmenter la surface du réservoir au contact du fluide hydraulique (M), caractérisé en ce que le dispositif est une structuration (S) à faible résistance de la paroi interne (7) du réservoir, orientée dans le sens périphérique, à peu près dans le sens de rotation (15) du moteur électrique, et en ce que le fluide hydraulique (M), dans le réservoir (G), peut être mis en circulation dans le sens de rotation (15), par les composants en rotation du moteur électrique (E), au-dessus de ce moteur (E), du moins.

2. Groupe motopompe hydraulique suivant la revendication 1, caractérisé en ce que l'arbre (12) du moteur électrique (E) est prolongé vers le haut au travers d'une fermeture de réservoir (10), entraîne le ventilateur (K), et sert d'activateur de circulation pour le fluide hydraulique (M).

3. Groupe motopompe hydraulique suivant la revendication 1, caractérisé en ce que la structuration (S) est formée par des rainures parallèles (17, 17''), disposées dans le sens périphérique dans la paroi interne (7) du réservoir.

4. Groupe motopompe hydraulique suivant la revendication 1, caractérisé en ce que la structuration (S) est un filetage (17', 18') dans la paroi interne (7) du réservoir.

5. Groupe motopompe hydraulique suivant les revendications 3 et 4, caractérisé en ce que les rainures (17) et/ou le filetage (17', 18') sont et/ou est conformé(es) par usinage dans la paroi interne (7) du réservoir, découpé(es) par exemple.

6. Groupe motopompe hydraulique suivant les revendications 3 et 4, caractérisé en ce que les rainures (17'') et/ou le filetage sont et/ou est conformé(es) dans la paroi interne (7) du réservoir par formage, par moletage ou estampage, par exemple.

7. Groupe motopompe hydraulique suivant la revendication 6, caractérisé en ce que les dents (18''), formées entre les rainures (17'') et/ou les rainures de filets par formage, dépassent vers l'intérieur du diamètre interne (di) de la paroi interne (7) du réservoir, non formée.

8. Groupe motopompe hydraulique suivant l'une quelconque des revendications 1 à 6, caractérisé en ce que la structuration (S) s'étend sur une zone (B), limitée dans le sens axial, de la paroi interne (7) du réservoir, et en ce que la profondeur des rainures et/ou du filet est constante sur la zone (B).

9. Groupe motopompe hydraulique suivant la revendication 8, caractérisé en ce que le pas dentaire axial (a1, a2, a3 ...) et/ou le pas de filetage (α) est constant sur la zone (B).

10. Groupe motopompe hydraulique suivant l'une quelconque des revendications 1 à 7 et 9, caractérisé en ce que la profondeur des rainures (17, 17'') et/ou du filet (17', 18') augmente d'une manière graduelle ou étagée, dans le sens axial, à partir d'une extrémité du moins de la zone axiale (B) de la structuration (S).

11. Groupe motopompe hydraulique suivant l'une quelconque des revendications 1 à 8 et 10, caractérisé en ce que le pas dentaire axial (a1, a2, ...) augmente d'une manière graduelle ou étagée, dans le sens axial, à partir d'une extrémité du moins de la zone (B), limitée dans le sens axial, de la structuration (S), et/ou en ce que le pas de filetage (α) diminue d'une manière graduelle ou étagée, de sorte que l'augmentation de surface augmente avec une distance croissante par rapport à l'extrémité de la zone axiale (B).

12. Groupe motopompe hydraulique suivant l'une quelconque des revendications 1 à 11, caractérisé en ce que la structuration (S), en coupe longitudinale du réservoir (G), présente des rainures (17, 17', 17'') et des dents (18, 18', 18''), triangulaires, circulaires, trapézoïdales, rectangulaires ou ondulées.

13. Groupe motopompe hydraulique suivant l'une quelconque des revendications 1 à 12, caractérisé en ce que le réservoir (G) est partagé, et se compose d'une partie supérieure (O) tubulaire, munie d'ailettes externes, en alliage léger ou en fonte, par exemple, et d'une partie inférieure (U), emmanchée côté interne dans la partie supérieure (O), en ce que le moteur électrique (E) est logé dans une bague de transfert thermique (5), qui s'étend vers le haut dans la partie supérieure (O), par l'intermédiaire du joint de séparation du réservoir, et s'applique sur la paroi interne (7) du réservoir, dans la partie supérieure (O), et en ce que la structuration (S), dans la partie supérieure (O), commence à une première distance axiale prédéfinie (A1) de la bague de transfert thermique (5), et s'achève à une seconde distance prédéfinie (A2) de l'extrémité supérieure de la partie supérieure (O).

14. Groupe motopompe hydraulique suivant l'une quelconque des revendications 1 à 13, caractérisé en ce qu'une structuration (S1) est également prévue dans la partie inférieure (U), dans la paroi interne du réservoir.

15. Groupe motopompe hydraulique suivant la revendication 15, caractérisé en ce que la valeur de la première distance (A1) est adaptée à un flux de chaleur, largement maintenu, du moteur électrique (E) dans la partie supérieure (O), par l'intermédiaire de la bague de transfert thermique (5), en direction du refroidissement forcé (Z).

16. Groupe motopompe hydraulique suivant la revendication 13, caractérisé en ce que la valeur de la seconde distance (A2) est adaptée au niveau de remplissage du réservoir (G) en fluide hydraulique (M).
